# EUROPEAN PATENT APPLICATION

(11) **EP 2 255 962 A1**
(43) Date of publication of application: **01.12.2010**
(21) Application number: 09722420.8
(22) Date of filing: 26.02.2009
(51) Int. Cl.: B32B 27/36

(54) **HIGHLY ADHESIVE FILM**

(30) Priority: 17.03.2008 JP 2008066938
(71) Applicant: Mitsubishi Plastics, Inc., Tokyo 103-0021 (JP)
(72) Inventor: KODA, Toshihiro, Maibara-shi Shiga 521-0234 (JP); FUJITA, Masato, Maibara-shi Shiga 521-0234 (JP)
(74) Representative: Hollatz, Christian
(86) International application number: PCT/JP2009/000847
(87) International publication number: WO 2009/116230

(57) **Abstract**

The present invention relates to a polyester film having an excellent easy-adhesive property to a topcoat agent which can be suitably used in the applications in which a good adhesion to the topcoat agent is required. There is provided an easy-adhesive film comprising a polyester film and a coating layer formed on the polyester film by a coating/stretching method, wherein the coating layer comprises a polyurethane resin having a polycarbonate structure and a carboxyl group and exhibiting a glass transition point of not higher than 10°C, and further comprises not more than 20% by weight of a crosslinking agent having a heat-crosslinkable functional group in an amount of not less than 10 mmol/g.

## Description

### TECHNICAL FIELD

The present invention relates to a polyester film which is provided thereon with a coating layer having an excellent adhesion property to various kinds of topcoat agents.

### BACKGROUND ART

Biaxially stretched polyester films have been used in the applications such as not only packaging materials, printing plate-making materials, displaying materials, transfer materials and window-attaching materials but also anti-reflective films used in membrane switches and flat displays, optical films such as diffusion sheets and prism sheets, and transparent touch panels, because they are excellent in transparency, dimensional stability, mechanical properties, heat resistance, electrical properties, gas-barrier property, chemical resistance and the like. However, in these applications, when a coating layer formed of the other material is laminated on the polyester film, there tends to occur such a problem that adhesion between the coating layer and the polyester film is deteriorated depending upon the material of the coating layer.

As one of methods for improving an adhesion property of the biaxially stretched polyester films, there is known the method of applying various resins onto a surface of the polyester film to form a coating layer having a good easy-adhesive property thereon.

For example, in Patent Documents 1 to 3, it is described that a polyester resin, an acrylic resin, a polyurethane resin or a specific crosslinking agent is used to form such a coating layer.

However, these conventional easy-adhesive coating layers tend to be still unsatisfactory in bonding property depending upon kinds of topcoat layers. For example, as the recent topcoat agent, there have been increasingly used so-called solvent-free type UV curable coating materials. However, such a solvent-free topcoat agent tends to be deteriorated in penetration to the easy-adhesive layer as well as swelling effect thereof as compared to solvent-based topcoat agents, resulting in poor adhesion therebetween. In Patent Document 4, there is described a coating layer comprising a specific polyurethane resin in order to improve an adhesion property thereof. However, even such a coating layer may still fail to exhibit a sufficient adhesion to the above-described solvent-free topcoat agents.

Patent Document 1: Japanese Patent Application Laid-Open (KOKAI) No. 8-290141
Patent Document 2: Japanese Patent Application Laid-Open (KOKAI) No. 11-286092
Patent Document 3: Japanese Patent Application Laid-Open (KOKAI) No. 2000-229395
Patent Document 4: Japanese Patent Application Laid-Open (KOKAI) No. 2-158633

### DISCLOSURE OF THE INVENTION

### Problems to be Solved by the Invention

The present invention has been accomplished to solve the above problems. An object of the present invention is to provide a polyester film which is provided thereon with a coating layer having an excellent easy-adhesive property to a topcoat agent.

### Means for Solving Problems

As a result of the present inventors' earnest study, it has been found that the above problems can be solved by providing a coating layer formed of a specific kind of compound on the polyester film. The present invention has been attained on the basis of this finding.

That is, according to the present invention, there is provided an easy-adhesive film comprising a polyester film and a coating layer formed on the polyester film by a coating/stretching method, which coating layer comprises a polyurethane resin having a polycarbonate structure and a carboxyl group and exhibiting a glass transition point of not higher than 10°C, and further comprises not more than 20% by weight of a crosslinking agent having a heat-crosslinkable functional group in an amount of not less than 10 mmol/g.

### EFFECT OF THE INVENTION

The present invention can provide a polyester film which is provided thereon with a coating layer having an excellent easy-adhesive property to a topcoat agent, and therefore has a very high industrial value.

### PREFERRED EMBODIMENTS FOR CARRYING OUT THE INVENTION

The present invention is described in detail below. The base film used in the coated film of the present invention is formed of a polyester. As the polyester, there may be used those polyesters produced by melt-polycondensing a dicarboxylic acid such as terephthalic acid, isophthalic acid, 2,6-naphthalenedicarboxylic acid, adipic acid, sebacic acid, 4,4'-diphenyldicarboxylic acid and 1,4-cyclohexyldicarboxylic acid or an ester thereof with a glycol such as ethylene glycol, diethylene glycol, triethylene glycol, propylene glycol, 1,4-butanediol, neopentyl glycol and 1,4-cyclohexane dimethanol. The polyesters formed of these acid and glycol components may be produced by optionally using ordinary methods. For example, there may be adopted such a method in which a lower alkyl ester of an aromatic dicarboxylic acid and a glycol are subjected to transesterification reaction, or the aromatic dicarboxylic acid and the glycol are directly subjected to esterification reaction, to substantially form a bis-glycol ester of the aromatic dicarboxylic acid or an oligomer thereof, and then the obtained ester or oligomer is subjected to polycondensation by heating under reduced pressure. According to the aimed applications, an aliphatic dicarboxylic acid may be copolymerized with the above components.

Typical examples of the polyester used in the present invention include polyethylene terephthalate, polyethylene 2,6-naphthalate and poly-1,4-cyclohexane dimethylene terephthalate, as well as those polyesters obtained by copolymerizing the above acid component and the above glycol component therewith. These polyesters may comprise other components or additives, if required.

The polyester film of the present invention may also comprises particles for the purposes of ensuring a good traveling property of the resulting film and preventing occurrence of flaws thereon, etc. Examples of the particles include inorganic particles such as silica, calcium carbonate, magnesium carbonate, calcium phosphate, kaolin, talc, aluminum oxide, titanium oxide, alumina, barium sulfate, calcium fluoride, lithium fluoride, zeolite and molybdenum sulfide; and organic particles such as crosslinked polymer particles and calcium oxalate. In addition, as the particles, there may also be used deposited particles obtained during the process for production of the polyester, etc.

The particle diameter and content of the particles used in the polyester film may be selected and determined according to the aimed applications and objects of the resulting film. The average particle diameter of the particles is usually in the range of 0.01 to 5.0 µm. When the average particle diameter of the particles is more than 5.0 µm, the resulting film tends to exhibit an excessively high surface roughness, so that the particles tend to be fallen off from the surface of the film. When the average particle diameter of the particles is less than 0.01 µm, the surface roughness of the resulting film tends to be too low, thereby sometimes failing to attain a sufficient easy-slip property of the film. The content of the particles in the polyester film is usually 0.0003 to 1.0% by weight and preferably 0.0005 to 0.5% by weight based on the weight of the polyester. When the content of the particles is less than 0.0003% by weight, the resulting film tends to be insufficient in easy-slip property. On the other hand, when the content of the particles added is more than 1.0% by weight, the resulting film tends to be insufficient in transparency. In particular, in the case where the obtained film should ensure a good transparency, a good surface smoothness or the like, substantially no particles may be incorporated in the polyester. In addition, various stabilizers, lubricants or antistatic agents, etc., may be appropriately added to the polyester film.

As the method for forming the film of the present invention, there may be used any of ordinary known film-forming methods, and the method is not particularly limited. For example, a sheet obtained by melt-extrusion of the polyester is stretched in one direction thereof at a temperature of 70 to 145°C at a stretch ratio of 2 to 6 times by a roll stretching method to obtain a monoaxially stretched film. Next, the thus obtained monoaxially stretched film is stretched within a tenter in the direction perpendicular to the previous stretching direction at a temperature of 80 to 160°C at a stretch ratio of 2 to 6 times and then heat-treated at a temperature of 150 to 250°C for 1 to 600 sec to obtain the aimed film. Further, upon the heat treatment, in the heat-treating zone and/or a cooling zone located at an outlet of the heat treatment, the film is preferably subjected to relaxation by 0.1 to 20% in a longitudinal direction and/or a lateral direction thereof.

The polyester film of the present invention may have either a single layer structure or a multi-layer structure. In the polyester film having a multi-layer structure, polyesters used for a surface layer and an inner layer, for both the surface layers or for the respective layers may be different from each other according to the aimed applications and objects thereof.

The polyester film of the present invention is provided on at least one surface thereof with a coating layer. In addition, the polyester film may also be provided on its opposed surface with a similar or other coating layer or a functional layer. As a matter of course, these polyester films are also involved in the scope of the present invention.

The coating layer used in the present invention may be obtained by a so-called in-line coating method in which the coating layer is formed during the process for production of the polyester film, in particular, by a coating/stretching method in which the film is stretched after the coating step.

The in-line coating method means a method in which the coating step is carried out during the process for production of the polyester film, more specifically, such a method in which the coating step is carried out in an optional stage from melt-extrusion of the polyester to taking-up of the film which has been subjected to biaxial stretching and then to thermal fixing. In general, any of the substantially amorphous unstretched sheet obtained by melting and rapidly cooling the polyester, the monoaxially stretched film obtained by stretching the unstretched sheet in a longitudinal direction (length direction) thereof, or the biaxially stretched film before the thermal fixing, may be subjected to the coating step. In particular, as the preferred coating/stretching method, the method of subjecting the monoaxially stretched film to the coating step and then stretching the thus coated film in a lateral direction thereof is more excellent.

The above method has merits in view of production costs because formation of the film and coating for forming the coating layer can be conducted simultaneously. In addition, since the stretching is carried out after completion of the coating, it is possible to form a uniform thin coating layer, resulting in a stable adhesion property thereof to the polyester film. Also, the polyester film before being biaxially stretched is first covered with the adhesive resin layer and then the polyester film and the coating layer are stretched at the same time, so that adhesion between the base film and the coating layer can be strengthened.

Further, upon the biaxial stretching of the polyester film, the film is stretched in a lateral direction thereof while grasping end portions of the film with the tenter, and therefore constrained in both the longitudinal and lateral directions thereof. This allows the polyester film to be exposed to high temperature while keeping a flatness thereof without formation of wrinkles, etc. Therefore, the temperature used in the heat treatment to be conducted after the coating can be increased up to a high temperature which has not been reached in the other conventional methods, so that the film-forming property of the coating layer can be enhanced, and the adhesion between the coating layer and the polyester film can be strengthened. In many cases, upon production of the easy-adhesive polyester film, uniformity of the coating layer, improvement in film-forming property thereof and good adhesive between the coating layer and the film will result in preferable properties of the resulting film.

In this case, a coating solution used for forming the coating layer is preferably in the form of an aqueous solution or a water dispersion from the viewpoints of easiness of handling, working environments and safety. However, the coating solution may comprise an organic solvent as long as a main medium of the coating solution is water and unless addition of the organic solvent adversely affects the aimed effects of the present invention.

Next, the coating layer provided on the film according to the present invention is described.
The polyurethane having a polycarbonate structure used in the present invention means a polyurethane in which polycarbonates are used as a polyol as one of main constitutional components thereof.

Examples of a polyisocyanate component of the polyurethane having a polycarbonate structure used in the present invention include tolylene diisocyanate, phenylene diisocyanate, 4,4'-diphenylmethane diisocyanate, hexamethylene diisocyanate, xylylene diisocyanate, 4,4'-dicyclohexylmethane diisocyanate and isophorone diisocyanate.

Examples of the polyol component other than the polycarbonates include polyethers such as polyoxyethylene glycol, polyoxypropylene glycol and polyoxytetramethylene glycol; polyesters such as polyethylene adipate, polyethylene-butylene adipate and polycaprolactone; acrylic polyols; and castor oil.

Examples of a chain extender or a crosslinking agent usable in the present invention include ethylene glycol, propylene glycol, butanediol, diethylene glycol, trimethylol propane, hydrazine, ethylenediamine, diethylenetriamine, isophorone diamine, 4,4'-diaminodiphenylmethane, 4,4'-diaminodicyclohexylmethane and water.

The polycarbonate polyols may be obtained by the reaction between a diphenyl carbonate and a diol, the reaction between a dialkyl carbonate and a diol, or the reaction between an alkylene carbonate and a diol. Examples of the diol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane.

The number-average molecular weight of the polycarbonate diol is preferably 300 to 5000 as measured by gel permeation chromatography (GPC) in terms of polystyrene.

The medium for the polyurethane comprising a polycarbonate as a constitutional component as used in the present invention may be a solvent, and is preferably water. In order to disperse or dissolve the polyurethane in water, there may be used those polyurethanes of a forcibly emulsifiable type which can be dispersed and dissolved using an emulsifier, or those polyurethanes of a self-emulsifiable type or a water-soluble type which are obtained by introducing a hydrophilic group into polyurethane resins, etc. Among these polyurethanes, in particular, self-emulsifiable type polyurethanes which are ionomerized by introducing an ion group into a skeleton of polyurethane resins are preferred because they are excellent in storage stability of the coating solution as well as water resistance, transparency and adhesion property of the resulting coating layer.

Examples of the ion group to be introduced include various groups such as a carboxyl group, a sulfonic acid group, a phosphoric acid group and a quaternary ammonium group. Among these groups, preferred is a carboxyl group. As the method of introducing a carboxyl group into the urethane resin, there may be used various methods which are carried out in respective stages of the polymerization reaction. For example, there may be used the method in which a carboxyl group-containing resin is used as a comonomer component upon synthesis of a prepolymer, or the method in which a carboxyl group-containing component is used as one component of a polyol, a polyisocyanate and a chain extender. In particular, there is preferably used the method in which a carboxyl group-containing diol is used to introduce a desired amount of the carboxyl group by adjusting an amount of the diol charged.

For example, the diol used in the polymerization for production of the urethane resin may be copolymerized with dimethylolpropionic acid, dimethylolbutanoic acid, bis-(2-hydroxyethyl)propionic acid, bis-(2-hydroxyethyl)butanoic acid, etc.

In addition, the carboxyl group is preferably formed into a salt thereof by neutralizing it with ammonia, amines, alkali metals, inorganic alkalis, etc. Among these compounds used for the neutralization, especially preferred are ammonia, trimethylamine and triethylamine.

In such a polyurethane resin, the carboxyl group thereof from which the neutralizing agent is removed in the drying step after the coating may be used as a crosslinking reaction site which can be reacted with other crosslinking agents. As a result, the polyurethane resin can exhibit an excellent stability in the form of a coating solution before being coated, and the resulting coating layer can be further improved in durability, solvent resistance, water resistance, anti-blocking property, etc.

The polyurethane used in the present invention is especially preferably such a resin constituted from a polycarbonate and a polyol, a polyisocyanate, a chain extender having a reactive hydrogen atom, and a compound having a group reactive with an isocyanate group and at least one anionic group. Also, the resin comprises a carboxyl group therein. In this case, the carboxyl group may be such a carboxyl group as the above ionic group used for rendering the polyurethane resin self-emulsifiable.

The content of the anionic group in the polyurethane is preferably 0.05 to 8% by weight. When the content of the anionic group is too small, the resulting polyurethane tends to be deteriorated in water solubility or water dispersibility. When the content of the anionic group is too large, the obtained coating layer tends to be deteriorated in water resistance, and water tends to be absorbed in the coating layer, so that mutual sticking of the resulting film is likely to occur.

The content of the polycarbonate component in the polyurethane is usually 20 to 95% by weight and preferably 40 to 90% by weight. When the content of the polycarbonate component is less than 20% by weight, the polyurethane tends to have a poor adhesion improving effect. When the content of the polycarbonate component is more than 95% by weight, the resulting polyurethane tends to be deteriorated in coatability.

Meanwhile, the polyurethane resin used in the present invention usually has a glass transition point (hereinafter occasionally referred to merely as "Tg") of not higher than 10°C. The polyurethane resin having Tg of higher than 10°C tends to be insufficient in easy-adhesive property. The Tg as used herein means such a temperature at which when measuring a dynamic viscoelasticity of a dried film formed of the polyurethane resin, E" becomes maximum.

The coating layer comprising the polyurethane having a low Tg as described above tends to suffer from so-called blocking of the film which is such a phenomenon that front and rear surfaces of the film are stuck together when the film is wound into a roll. In order to prevent occurrence of blocking of the film, there is usually used the method in which a crosslinking agent is used in combination as a constitutional component of the coating layer. However, in the method of preventing occurrence of blocking using the crosslinking agent, the polyurethane comprising the polycarbonate as used in the present invention in which an upper limit of Tg thereof is specifically defined tend to be inhibited from exhibiting the aimed effect of improving the easy-adhesive property. Therefore, the method must be carried out with a sufficient care.

Examples of the crosslinking agent ordinarily used include amino resin-based crosslinking agents such as melamine and benzoguanamine, oxazoline-based crosslinking agents, carbodiimide-based crosslinking agents, epoxy-based crosslinking agents and isocyanate-based crosslinking agents, as well as co-called polymer-type crosslinking agents obtained by copolymerizing the above crosslinkable functional groups into a skeleton of the other polymer. However, it is important that the crosslinking agent used in the present invention has no adverse influence on easy-adhesive property of the resulting film.

In order to crosslink the coating layer while maintaining an easy-adhesive property of the resulting film, it is required that the coating layer is prevented from exhibiting an excessively high crosslinking density. To meet the above requirement, the use of an excessively large amount of the crosslinking agent should be avoided, or the crosslinking agent having a less amount of functional groups may be used.

The amount of the functional group as used herein represents an amount of crosslinkable functional groups per a weight of the crosslinking agent molecule. For example, the amount of the functional groups in the structure of the crosslinking agent whose attribute is analyzed by ¹³C-NMR is determined by ¹H-NMR to obtain a ratio of the crosslinkable functional groups per a molecular weight if the crosslinking agent.

In the case where the crosslinking agent used above has a large amount of the functional groups, the crosslinking agent should be used only in a small amount. The crosslinking agent having a small amount of the functional groups is preferably used because such a crosslinking agent tends to have stable properties whether the amount of the crosslinking agent used is large or small. In the present invention, the crosslinking agent comprising the functional groups in an amount of more than 10 mmol/g is used in an amount of not more than 20% by weight based on the whole weight of the coating layer.

On the other hand, the polymer-type crosslinking agents comprise the functional groups in a small amount and, therefore, are likely to be suitably used. In the most preferred embodiment of the present invention, the polymer-type crosslinking agent having an oxazoline group is used together with the polyurethane having a carboxyl group.

In addition, in the present invention, in order to prevent occurrence of blocking, it is desirable that particles are incorporated in the coating layer such that the content of the particles is not less than 3% by weight based on the whole weight of the coating layer. When the content of the particles is less than 3% by weight, the effect of preventing occurrence of blocking tends to be insufficient. When the content of the particles is too large, although the blocking preventive effect is high, the resulting coating layer tends to be deteriorated in transparency and continuity, so that the strength of the coating layer tends to be lowered, and further the easy-adhesive property of the resulting film tends to be deteriorated. More specifically, the content of the particles in the coating layer is not more than 15% by weight and preferably not more than 10% by weight. By using the above method, it is possible to satisfy both of an easy-adhesive property and an anti-blocking property of the resulting film.

Examples of the particles usable in the present invention include inorganic particles such as silica, alumina and metal oxides, and organic particles such as crosslinked polymer particles. In particular, from the viewpoints of a good dispersibility in the coating layer and a good transparency of the resulting coating film, silica particles are preferred.

When the particle diameter of the particles is too small, the effect of preventing occurrence of blocking tends to be hardly attained. When the particle diameter of the particles is too large, the particles tend to be fallen off from the coating film. The average particle diameter of the particles is preferably about 1/2 to about 10 times the thickness of the coating layer. Further, when the particle diameter of the particles is too large, the resulting coating layer tends to be deteriorated in transparency. The average particle diameter of the particles is preferably not more than 300 nm and more preferably not more than 150 nm. The average particle diameter as described herein may be obtained by measuring a 50% average particle diameter, as a number-average particle diameter, of the particles as measured in a dispersion thereof using a microtrack UPA manufactured by Nikkiso Co., Ltd.

The proportion of the above polyurethane resin in the coating layer is not particularly limited. This is because although the coating layer is formed of the polyurethane as a main component, the polyurethane may be merely mixed in the coating layer formed of the other easy-adhesive resin as a main component to enhance an easy-adhesive property of the coating layer. Therefore, the proportion of the polyurethane resin in the coating layer may be appropriately determined in the range capable of attaining the aimed properties. However, when the proportion of the polyurethane resin is too small, the effect of addition of the polyurethane resin tends to be hardly attained. Therefore, the lower limit of the proportion of the polyurethane resin is not less than 20%, preferably not less than 40% and more preferably not less than 50% to obtain a high effect by addition thereof.

The coating solution for providing the easy-adhesive coating layer may also comprise components other than the above-described components, if required. Examples of the other components include surfactants, other binders, defoaming agents, coatability improvers, thickeners, antioxidants, ultraviolet absorbers, foaming agents, dyes and pigments. These additives may be used alone or in combination of any two or more thereof, if required.

As the method of applying the coating solution onto the polyester film, there may be used those coating techniques described, for example, in Yuji HARAZAKI, "Coating Methods", Maki-shoten, 1979. Specific examples of the coating techniques include coating methods using an air doctor coater, a blade coater, a rod coater, a knife coater, a squeeze coater, an impregnation coater, a reverse roll coater, a transfer roll coater, a gravure coater, a kiss roll coater, a cast coater, a spray coater, a curtain coater, a calendar coater, an extrusion coater, a bar coater, etc.

Meanwhile, in order to improve a coatability and an adhesion property of the coating agent onto the film, the film before being coated therewith may be subjected to chemical treatments, corona discharge treatments or plasma treatments, etc.

The coating amount of the coating layer provided on the polyester film as a finally obtained coated film is usually 0.002 to 1.0 g/m², preferably 0.005 to 0.5 g/m² and more preferably 0.01 to 0.2 g/m². When the coating amount of the coating layer is less than 0.002 g/m², the resulting coating layer tends to hardly exhibit a sufficient adhesion property. When the coating amount of the coating layer is more than
1.0 g/m², the resulting coating layer tends to suffer from deterioration in appearance and transparency, and the resulting film tends to undergo occurrence of blocking and increase in production costs.

### EXAMPLES

The present invention is described in more detail below by Examples. However, these Examples are only illustrative and not intended to limit the present invention thereto, and the variations and other modifications are possible without departing from the scope of the present invention. Meanwhile, the methods for evaluating various properties used in Examples and Comparative Examples are as follows.

### (1) Adhesion property:

The active energy radiation-curing resin composition shown below was applied onto a coating layer formed on a polyester film such that a coating film obtained after being cured had a thickness of 3 µm, and then irradiated with light for about 10 sec at an irradiation distance of 150 mm using a high-pressure mercury lamp having an irradiation energy of 160 W/cm to cure the composition, thereby obtaining a laminated film having a structure of polyester film/easy-adhesive coating layer/active energy radiation-cured resin layer. The active energy radiation-cured resin layer of the resulting laminated film was cut at the intervals of 1 inch in width to form 100 cross-cuts thereon, and immediately subjected to a rapid peel test using a cellotape (registered trademark) three times at the same position of the film to evaluate adhesion between the layers by an area of the film from which the cross-cuts of the cured resin layer were peeled off. The evaluation criteria were as follows.

⊚: Number of cross-cuts peeled = 0
○: 1 ≤ number of cross-cuts peeled ≤ 10
△: 11 ≤ number of cross-cuts peeled ≤ 20
×: 21 < number of cross-cuts peeled
××: Whole cross-cuts were peeled off.
• Curing resin composition: composition comprising 100 parts of 1,9-nonanediol diacrylate and 4 parts of "IRGACURE 184" produced by Ciba Specialty Corp.

### (2) Anti-blocking property:

Two polyester films to be measured were prepared, and overlapped together such that the respective coating layers were opposed to each other. Then, an area of 12 cm x 10 cm on the thus overlapped films was pressed at a temperature of 40°C and a humidity of 80% RH under a pressure of 10 kg/cm² for 20 hr. Thereafter, the films were peeled off from each other according to the method prescribed by ASTM-D-1893 to measure a peel load required thereupon. It is recognized that a smaller peel load indicates a less occurrence of blocking, and the peel load of less than 150 g/cm is acceptable without any significant problems. The film having a peel load of more than 150 g/cm tends to become practically problematic upon use in some cases.

### (3) Transparency:

According to JIS-K7136, the hazes of films were measured using an integrating sphere type turbidity meter "NDH-2000" manufactured by Nippon Denshoku Kogyo Co., Ltd., to calculate a difference in haze between the film on which no coating layer was formed and the film on which a coating film was formed, thereby determining a rate of increase in haze owing to formation of the coating layer. The smaller rate of increase in haze of the film having the coating layer relative to the film having no coating layer indicates that the transparency of the coating layer is more excellent.

### (4) Glass transition point (Tg):

A solution or a water dispersion of a polyurethane resin was dried in a Teflon (registered trademark) Petri dish such that a thickness of a coating film thereof after dried was 500 µm. The drying conditions were adjusted such that the coating film was dried at room temperature for one week, and then further dried at 120°C for 10 min. The resulting coating film was cut into 5 mm in width and set on a dynamic viscoelasticity measuring apparatus "DVA-200 Model" manufactured by IT Keisoku Seigyo Co., Ltd., between chucks spaced from each other with a distance of 20 mm, followed by measuring E" at a frequency of 10 Hz while heating the film at a temperature rise rate of 10°C/min from -100°C to 200°C. The maximum E" value was determined as Tg.

The polyester raw materials used in Examples and Comparative Examples are as follows.
(Polyester 1): Polyethylene terephthalate comprising substantially no particles and having an intrinsic viscosity of 0.66.
(Polyester 2): Polyethylene terephthalate comprising 0.6 part by weight of amorphous silica having an average particle diameter of 2.5 µm, and having an intrinsic viscosity of 0.66.

Also, the following coating compositions were used. In the followings, the term "part(s)" means "part(s) by weight" in terms of solid resin components.
(U1): Water dispersion of a polyurethane resin having Tg of -30°C which is obtained by neutralizing a prepolymer comprising 400 parts of a polycarbonate polyol produced from 1,6-hexanediol and diethyl carbonate which has a number-average molecular weight of 2000, 10.4 parts of neopentyl glycol, 58.4 parts of isophorone diisocyanate and 74.3 parts of dimethylol butane with triethylamine, and then s subjecting the neutralized product to chain extension reaction using isophorone diamine.

(U2): Water dispersion of a polyurethane resin having Tg of 7°C which is obtained by neutralizing a prepolymer comprising 320 parts of a polycarbonate polyol produced from 1,6-hexanediol and diethyl carbonate which has a number-average molecular weight of 800, 505.7 parts of hydrogenated diphenylmethane diisocyanate and 148.6 parts of dimethylolbutanoic acid with triethylamine, and then subjecting the neutralized product to chain extension reaction using isophorone diamine.

(U3): Water dispersion-type polycarbonate polyurethane resin "RU-40-350" (produced by Stahl Corp.) having a carboxyl group and exhibiting Tg of -20°C.
(U4): Water dispersion-type polycarbonate polyurethane resin "TAKELAC W-511" (produced by Mitsui Chemical Polyurethane, Co., Ltd.) having a carboxyl group and exhibiting Tg of 35°C.
(U5): Water dispersion of a polyurethane resin having Tg of 60°C which is obtained by neutralizing a prepolymer comprising 180 parts of a polycarbonate polyol produced from 1,6-hexanediol and diethyl carbonate which has a number-average molecular weight of 400, 520 parts of a polyester polyol produced from terephthalic acid and ethylene glycol, 420.4 parts of methylene-bis(4-cyclohexyl isocyanate) and 121.8 parts of dimethylolbutanoic acid with triethylamine, and then subjecting the neutralized product to chain extension reaction using isophorone diamine.
(U6): Water dispersion of a polyurethane resin having Tg of -47°C which is obtained by neutralizing a prepolymer comprising 400 parts of a polycarbonate polyol produced from 3-methyl-1,5-pentanediol and adipic acid which has a number-average molecular weight of 3000, 41.7 parts of neopentyl glycol, 133 parts of isophorone diisocyanate and 29.7 parts of dimethylolbutanoic acid with triethylamine, and then subjecting the neutralized product to chain extension reaction using isophorone diamine.

(F1): Water dispersion of silica sol having an average particle diameter of 0.07 µm.
(F2): Water dispersion of silica sol having an average particle diameter of 0.44 µm.

(C1): Polymer-type crosslinking agent "EPOCROSS WS-500" (produced by Nippon Shokubai Co., Ltd.) whose oxazoline group is bonded as a branched chain to an acrylic resin; oxazoline group content: 4.5 mmol/g.
(C2): Methoxymethylol melamine "BECKAMINE J-101" (produced by DIC Corp.); functional group (methoxy, methylol and imino groups) content: 18 mmol/g.

### Example 1:

The polyester 1 and the polyester 2 were blended with each other at a weight ratio of 95/5, and the resulting mixture was fully dried and then heated and melted at a temperature of 280 to 300°C. The molten resin was extruded through a T-shaped mouthpiece into a sheet shape, and allowed to closely contact with a mirror surface of a cooling drum maintained at a temperature of 40 to 50°C by an electrostatic adhesion method to cool and solidify the resin, thereby forming an unstretched polyethylene terephthalate film. The thus obtained film was stretched at a stretch ratio of 3.7 times in a longitudinal direction thereof while passing it through a group of heating rolls maintained at 85°C, thereby obtaining a monoaxially oriented film. Then, a coating composition as shown in Table 1 was applied onto one surface of the thus obtained monoaxially oriented film.
Next, the resulting coated film was introduced into a tenter type stretching machine, and stretched at a stretch ratio of 4.0 times in a width direction thereof while drying the coating composition by using a heat generated therefrom, and further subjected to heat treatment at 230°C, thereby obtaining a coated film comprising a 100 µm-thick biaxially oriented polyethylene terephthalate film and a coating layer formed on the film in a coating amount of 0.04 g/m². The properties of the thus obtained film are shown in Table 2.

### Examples 2 to 13 and Comparative Examples 1 to 5:

The same procedure as defined in Example 1 was conducted except that the coating solution was changed to those shown in Table 1, thereby obtaining obtaining coated films each comprising a 100 µm-thick base film and a coating layer formed on the film in such a coating amount as shown in Table 1. The properties of the thus obtained films are shown in Table 2.

**Table 1**

| Examples and Comparative Examples | Components | Weight ratio of solid components | Coating amount (g/m²) |
|---|---|---|---|
| Example 1 | U1/C1/F1 | 60/30/6 | 0.04 |
| Example 2 | U2/C1/F1 | 60/30/6 | 0.04 |
| Example 3 | U3/C1/F1 | 60/30/6 | 0.04 |
| Example 4 | U1/C1/F1 | 60/30/3 | 0.04 |
| Example 5 | U3/C1/F1 | 60/30/3 | 0.04 |
| Example 6 | U3/C1/F1 | 60/30/10 | 0.04 |
| Example 7 | U3/C1 | 60/30 | 0.04 |
| Example 8 | U3/C1/F1 | 60/30/20 | 0.04 |
| Example 9 | U3/C1/F2 | 60/30/6 | 0.04 |
| Example 10 | U1/C1/F1 | 70/20/6 | 0.04 |
| Example 11 | U1/F1 | 90/6 | 0.04 |
| Example 12 | U2/C1/F1 | 60/30/6 | 0.09 |
| Example 13 | U3/C2/F1 | 60/10/6 | 0.04 |
| Comparative Example 1 | U4/C1/F1 | 60/30/6 | 0.04 |
| Comparative Example 2 | U5/C1/F1 | 60/30/6 | 0.04 |
| Comparative Example 3 | U6/C1/F1 | 60/30/6 | 0.04 |
| Comparative Example 4 | U4/C1 | 60/30 | 0.04 |
| Comparative Example 5 | U3/C2/F1 | 60/30/6 | 0.04 |

### Comparative Example 6:

The same procedure as defined in Example 1 was conducted except that no coating layer was formed, thereby obtaining a biaxially oriented polyethylene terephthalate film. Next, a coating solution having the same compositional ratio as that used in Example 1 was applied onto the thus obtained film such that a coating amount thereof was 0.04 g/m² after dried, in an off-line manner by a bar coating method, and then subjected to heat treatment at a dryer set temperature of 100°C for 5 sec, thereby obtaining a coated film. As a result, as shown in Table 1, it was confirmed that the thus obtained coated film was unsatisfactory in adhesion property thereof probably owing to insufficient drying and curing of the easy-adhesive layer.

### Comparative Example 7:

The same procedure as defined in Comparative Example 6 was conducted except that the dryer set temperature was changed to 180°C, thereby obtaining a coated film. As a result, it was confirmed that the thus obtained coated film suffered from wrinkles owing to shrinkage of the film within the dryer and, therefore, was deteriorated in surface flatness. The other properties of the thus obtained film are shown in Table 2.

**Table 2**

| Examples and Comparative Examples | Adhesion property | Anti-blocking property (g/10 cm) | Transparency (%) |
|---|---|---|---|
| Example 1 | ⊚ | 50 | 0.1 |
| Example 2 | ○ | 30 | 0.1 |
| Example 3 | ⊚ | 50 | 0.1 |
| Example 4 | ⊚ | 140 | 0.1 |
| Example 5 | ⊚ | 120 | 0.1 |
| Example 6 | ⊚ | 30 | 0.8 |
| Example 7 | ⊚ | 650 | 0.1 |
| Example 8 | △ | 20 | 2.4 |
| Example 9 | ⊚ | 40 | 3.5 |
| Example 10 | ⊚ | 60 | 0.1 |
| Example 11 | ⊚ | 90 | 0.1 |
| Example 12 | ⊚ | 50 | 0.2 |
| Example 13 | ○ | 60 | 0.1 |
| Comparative Example 1 | × | 20 | 0.1 |
| Comparative Example 2 | ×× | 20 | 0.1 |
| Comparative Example 3 | ×× | 50 | 0.1 |
| Comparative Example 4 | × | 40 | 0.1 |
| Comparative Example 5 | × | 40 | 0.1 |
| Comparative Example 6 | × | 100 | 0.3 |
| Comparative Example 7 | ○ | 80 | 0.2 |

### INDUSTRIAL APPLICABILITY

The film of the present invention can be suitably used as a biaxially stretched polyester film in the applications requiring an excellent adhesion property.

## Claims

1. An easy-adhesive film comprising a polyester film and a coating layer formed on the polyester film by a coating/stretching method, which coating layer comprises a polyurethane resin having a polycarbonate structure and a carboxyl group and exhibiting a glass transition point of not higher than 10°C, and further comprises not more than 20% by weight of a crosslinking agent having a heat-crosslinkable functional group in an amount of not less than 10 mmol/g.
